# EUROPEAN PATENT SPECIFICATION

(11) **EP 2 159 495 B1**
(45) Date of publication and mention of the grant of the patent: **15.11.2017**
(21) Application number: 08290799.9
(22) Date of filing: 25.08.2008
(51) Int. Cl.: F24D 12/02, F24D 3/08, F24D 3/10, F24D 11/02, F24D 19/10

(54) **Heating system**
Heizsystem
Système de chauffage

(43) Date of publication of application: 03.03.2010
(73) Proprietor: Honeywell Technologies Sarl, 1180 Rolle (CH)
(72) Inventor: Alber, Kurt , c/o Honeywell Technologies Sarl, CH-1024 Ecublens (CH); Hanesch, Frank , c/o Honeywell Technologies Sarl, CH-1024 Ecublens (CH); Converset, B. , c/o Honeywell Technologies Sarl, CH-1024 Ecublens (CH); Stanton, Martyn , c/o Honeywell Technologies Sarl, CH-1024 Ecublens (CH); Rossi, Roberto , c/o Honeywell Technologies Sarl, CH-1024 Ecublens (CH); Smets, Twan , c/o Honeywell Technologies Sarl, CH-1024 Ecublens (CH)
(74) Representative: Abel & Imray

(56) References cited:
- EP-A- 1 672 287
- DE-A1- 2 659 806
- DE-A1- 3 302 024
- DE-A1- 3 540 327
- FR-A- 2 255 555
- FR-A- 2 291 455
- FR-A- 2 580 792
- US-A- 5 259 445
- US-A- 5 655 710
- US-A1- 2008 179 415

## Description

### FIELD OF THE INVENTION

The present invention relates to a controller for controlling a heating system having two heat sources and to a method of controlling such a heating system.

### BACKGROUND OF THE INVENTION

It is well known that, under certain conditions, heat pumps are capable of operating more efficiently than alternative heat sources such as boilers. Under such conditions it is, therefore, desirable to use a heat pump in preference to a boiler. In some circumstances it may, however, be necessary to supplement the heat supplied by a heat pump by using a boiler. For example, a central heating system supplied by a heat pump alone may not be able to cope with a raised heating demand that may occur, for example, during a period of cold weather. Accordingly, bivalent or dual heat source central heating systems are well known which comprise a heat pump and a boiler in which the boiler is used to "boost" the heat supplied by the heat pump to a heat exchange fluid for transfer of the heat to a load to meet a raised heating demand at the load.

US 2008/0179415 discloses a hydronic heating system, including condensing and non-condensing boilers in a hybrid arrangement. A control apparatus independently selects and operates the various boilers in the system to optimise boiler efficiency and operating characteristics.

Documents FR 2255555 and FR 2291455 also disclose hydronic heating systems comprising a boiler and a heat pump. It is also known that the working temperature range of a heat pump is limited to a maximum return temperature that may, for example, be approximately 40°C. During low demand conditions, when the heat pump is capable of meeting the demand by itself, it may be desirable to use the heat pump in preference to an alternative heat source such as a boiler. For return temperatures above the maximum return temperature, however, it may be desirable to use the alternative heat source in preference to the heat pump.

### SUMMARY OF THE INVENTION

According to one aspect of the present invention, there is provided a heating system having first and second heat sources, said first heat source having a greater heat output than said second heat source, a fluid which can be heated by said first and second heat sources and transported to and from a load by a pump means, a return temperature sensor arranged to monitor a return temperature of the fluid returning to said second heat source, a supply temperature sensor arranged to monitor a supply temperature of the fluid leaving said first heat source, a controller having, as an input, the output of said return and supply temperature sensors, and having outputs coupled to the first and second heat sources, said controller being arranged to generate a first output signal to disable said first heat source when said supply temperature exceeds a preset supply temperature limit and being arranged to generate a second output signal to disable said second heat source when said return temperature exceeds a preset return temperature limit wherein said preset supply temperature has a first value when the first and second heat sources are enabled and a second value when only said first heat source is enabled, said second value being higher than said first value. According another of the present invention, there is provided a method of controlling a heating system having first and second heat sources, said first heat source having a greater heat output than said second heat source, said heating system having a fluid which can be heated by said first and second heat sources and transported to a load for delivering heat thereto and then returned to said first and said second heat sources, said method comprising the steps of:
heating said fluid;
transporting said fluid to said load;
returning said fluid from said load to said first and second heat sources;
monitoring a supply temperature of the fluid output from said first heat source;
monitoring a return temperature of the fluid returning to said second heat source;
comparing said supply temperature with a preset supply temperature limit;
generating a first heat source de-activation signal from said controller when said supply temperature exceeds said preset supply temperature limit;
coupling said signal to said first heat source to de-activate said first heat source;
comparing said return temperature with a preset return temperature limit;
generating a second heat source de-activation signal from said controller when said return temperature exceeds said preset return temperature limit; coupling said signal to said second heat source to de-activate said second heat source and
assigning a first value to said preset supply temperature limit when said first and said second heat sources are enabled, and assigning a second value to said preset supply temperature limit when only said first heat source is enabled, said second value being higher than said first value.

### BRIEF DESCRIPTION OF THE DRAWINGS

Embodiments of the present invention will now be described with reference to the accompanying drawings in which:
Figure 1 is a schematic representation of a heating system in accordance with a first embodiment of the present invention;
Figure 2 is a schematic diagram of a controller for use with the embodiments of the heating system, in accordance with the present invention;
Figure 3 is a schematic representation of a further heating system in accordance with a second embodiment of the present invention; and
Figure 4 is a schematic representation of a heating system in accordance with a third embodiment of the present invention.

### DETAILED DESCRIPTION OF THE DRAWINGS

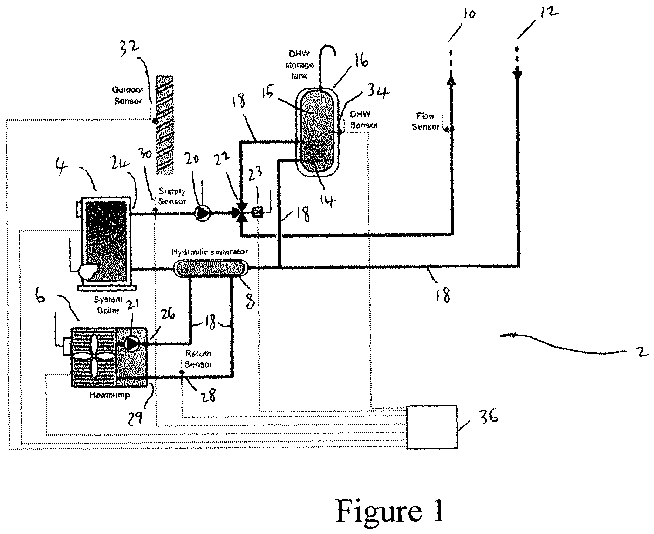

Figure 1 shows a heating system generally designated by reference numeral 2 which has a first heat source in the form of a boiler 4 and a second heat source in the form of a heat pump 6. The boiler 4 and the heat pump 6 are connected in series via a hydraulic separator 8. The heating system 2 is operable so as to supply heat for central heating and for the supply of domestic hot water. Accordingly, the series combination of the boiler 4 and heat pump 6 is connected across a main central heating loop (not shown in the interests of clarity) which has a supply path 10 and a return path 12. The boiler/heat pump combination is also connected to a heat exchanger 14 for heating water 15 in a domestic hot water storage tank 16. A heat exchange fluid, typically water 18, circulates around the heating system 2 through a series of pipes under the influence of a first pump 20 and a second pump 21. As shown in Figure 1, the first pump 20 is located after a supply outlet 24 of the boiler 4 and the second pump 21 is located at a supply outlet 26 of the heat pump 6. The heating system 2 further comprises a change-over valve 22 which is operable via an actuator 23. The change-over valve 22 is operable to either divert the water 18 along the supply path 10 to provide heat to the main central heating loop or to divert the water 18 towards the heat exchanger 14 to heat the water 15 in the storage tank 16. The heating system 2 further comprises a return temperature sensor 28 associated with a return inlet 29 of the heat pump 6, a supply temperature sensor 30 associated with the supply outlet 24 of the boiler 4, an outdoor temperature sensor 32 and a domestic hot water temperature sensor 34 for measuring the temperature of the water 15 in the storage tank 16.

The hydraulic separator 8 allows the water 18 to flow through both the boiler 4 and the heat pump 6 under the influence of the first and second pumps 20,21 even when a flow rate of the first pump 20 is different from a flow rate of the second pump 21. Thus, the hydraulic separator 8 accommodates the independent operation of the first and second pumps 20,21.

As indicated by the dotted lines in Figure 1, a controller 36 is coupled to the boiler 4, and the heat pump 6. The controller 32 is also coupled to the return, supply, outdoor and domestic hot water temperature sensors 28,30,32,34 and to the actuator 23 associated with the change-over valve 22.

In use, the heating system 2 of Figure 1 is switched on to heat the water 18 in the heating loop or the water 15 stored in the hot water tank 16. If the outdoor temperature falls too far which may occur, for example, during a period of cold weather, the heat pump 6 is no longer capable of providing heat to the water 18. Accordingly, the controller 36 is preset so that if the outdoor temperature, as detected by the outdoor temperature sensor 32, falls below a preset outdoor temperature limit, a heat pump disable signal is generated within the controller 36, as will be later discussed, which switches off the heat pump 6 leaving the boiler 4 to heat the water 18. A typical outdoor temperature limit may, for example, be -10°C. In addition, the controller 36 is preset so that if the return temperature of the water 18, as detected by the return sensor 28, exceeds a preset return temperature limit, a heat pump disable signal is generated within the controller 36 that switches off the heat pump 6. The controller 36 also compares the supply temperature as detected by the supply sensor 30 to a preset supply temperature limit. If the supply temperature exceeds the preset supply temperature limit, a boiler disable signal is generated within the controller 36 that switches off the boiler 4. The preset supply temperature limit is assigned a value depending on an operational state of the boiler 4 and the heat pump 6. For example, if the return temperature is below the return temperature limit and the boiler 4 and the heat pump 6 are both enabled, the preset supply temperature limit is assigned a first value. Alternatively, if the return temperature is above the return temperature limit and the boiler 4 is enabled but the heat pump 6 is disabled, the preset supply temperature limit is assigned a second value higher than the first value.

On initial detection of a heating demand when the outdoor temperature is above the preset outdoor temperature limit, the return temperature is below the return temperature limit and the supply temperature is below the lower value of the preset supply temperature limit, boiler and heat pump enable signals are generated within the controller 36 which switch on the boiler 4 and the heat pump 6 to provide heat to the water 18. Under low-load conditions, that is, when the heat pump 6 is capable of meeting the heating demand by itself and the return temperature is below the return temperature limit, the water 18 is initially heated rapidly by both the boiler 4 and the heat pump 6 and the supply temperature soon exceeds the lower value of the preset supply temperature limit. A boiler disable signal is then generated within the controller 36 that switches off the boiler 4 so that the heat pump 6 alone provides heat to the water 18. Under higher load conditions, when the return temperature exceeds the return temperature limit, a heat pump disable signal is generated within the controller 36 that switches off the heat pump 6 so that the boiler 4 alone provides heat to the water 18. The boiler subsequently continues to supply heat to the water 18 until the supply temperature reaches the upper value of the preset supply temperature limit and the controller 36 switches off the boiler 4. This method of controlling the boiler and heat pump operation maximises the heating efficiency of the system.

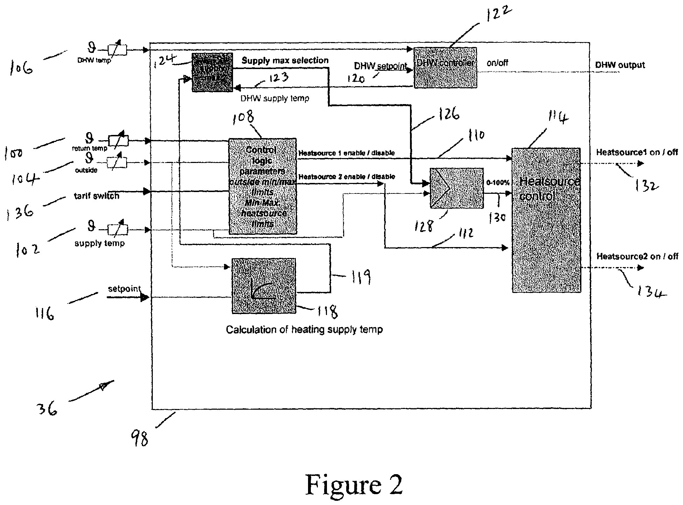

Figure 2 schematically illustrates the control system of the controller 36. For ease of reference, it will be seen that the controller has a number of inputs on the left side of Figure 2 and a number of outputs shown on the right side. Input signals are therefore generally processed from left to right although some signals travel from right to left. Various functional blocks for processing the signals are illustrated within the controller 36. All of these functional blocks are realised in software within a processing means in the form of an Atmel 8-bit AVR® microcontroller 98 having a product number Atmega169P or Atmegal69PV. The microcontroller 98 also stores the preset return, supply and outside temperature limits. In use, the return sensor 28 detects and transmits the return temperature as an input 100 to the controller 36, the supply sensor 30 detects and transmits the supply temperature as an input 102 to the controller 36, the outdoor sensor 32 detects and transmits the outside temperature as an input 104 to the controller 36 and the domestic hot water temperature sensor 34 detects and transmits the domestic hot water temperature as an input 106 to the controller 36. These signals are processed within a first functional block 108 which generates and passes a first heatsource enable/disable signal 110 for enabling/disabling the boiler 4 and a second heatsource enable/disable signal 112 for enabling/disabling the heat pump 6 to a second functional block 114. The microcontroller 98 is, therefore, operable in a first mode in which only the first heatsource signal 110 is enabled, a second mode in which only the second heatsource signal 112 is enabled and a third mode in which both the first and second heatsource signals 110 and 112 are enabled respectively.

When the outside temperature is above the outside temperature limit and the return temperature 100 is below the preset return temperature limit, typically 40°C, an enable signal 112 is passed from the first functional block 108 to the second functional block 114 to enable the heat pump 6, and when the return temperature 100 is above the preset return temperature limit, a disable signal 112 is passed from the first functional block 108 to the second functional block 114 to disable the heat pump 6.

When both the boiler 4 and the heat pump 6 are enabled when the outside temperature is above the outside temperature limit and the return temperature is below the return temperature limit of 40°C, a first value is assigned to the preset supply temperature limit in the first functional block 108. When only the boiler 4 is enabled at temperatures above the return temperature limit, a second value is assigned to the preset supply temperature limit in the first functional block 108 which second value is higher than the first value. Subsequently, when the return temperature 100 is below the preset return temperature limit, typically 40°C, and the supply temperature 102 exceeds the first value of the preset supply temperature limit, a disable signal 110 is passed from the first functional block 108 to the second functional block 114 to disable the boiler 4. Similarly, when the return temperature 100 is above the preset return temperature limit and the supply temperature 102 exceeds the second value of the preset supply temperature limit, a disable signal 110 is passed from the first functional block 108 to the second functional block 114 to disable the boiler 4.

In use, the controller 36 receives a central heating (CH) temperature setpoint input 116 which represents a central heating demand which may, for example, be associated with a desired room temperature. A third functional block 118 subsequently calculates a CH supply temperature setpoint 119 as a function of the CH temperature setpoint input 116 and the outside temperature 104. In addition, the controller 36 receives a domestic hot water (DHW) setpoint input 120 that represents a domestic hot water demand which may occur, for example, when a hot water tap is opened. A fourth functional block 122 subsequently calculates a DHW supply temperature setpoint 123 as a function of the DHW setpoint input 120 and the DHW input 106. A fifth functional block 124 selects the larger of the CH supply temperature and the DHW supply temperature setpoints 119,123 and passes the larger value 126 to a sixth functional block 128 which compares the larger supply temperature setpoint 126 to the measured supply temperature 102. The sixth functional block 128 employs a control algorithm such as a proportional-integral (PI) control algorithm to calculate a demand signal 130 which is passed to the second functional block 114. Depending on the states of the enable/disable signals 110, 112, the second functional block 114 then generates output signals 132 and 134 which are transmitted to the boiler 4 and the heat pump 6 respectively to switch the boiler 4 or the heat pump 6 on or off to meet the heating demand represented by the demand signal 130. In addition, the controller 36 comprises a tariff switch input 136 which may be used to enable or disable the boiler 4 or the heat pump 6 depending on the cost of energy supplied to the boiler 4 or the heat pump 6 which may vary according to, for example, the time of day.

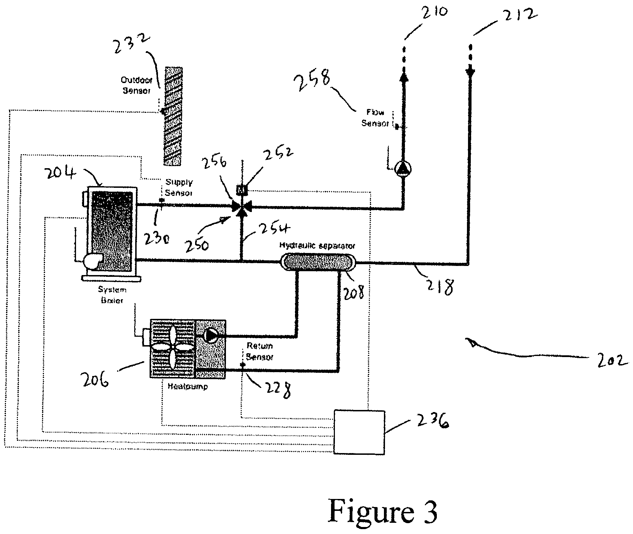

Reference is now made to Figure 3 which shows a second embodiment of a heating system 202. Many of the parts of the embodiment of Figure 3, when used in combination with the elements of the controller 36 described in Figure 2, perform corresponding functions to corresponding parts in the first embodiment of the heating system shown in Figure 1 and, as such, the parts in Figure 3 have reference numerals that are given by incrementing the reference numerals of the corresponding parts in Figure 1 by 200. The heating system 202 of Figure 3 differs from the heating system 2 of Figure 1 in that the heating system 202 includes a mixing valve 250 which is operable via an actuator 252 to control a flow temperature as measured by a flow temperature sensor 258 in a main supply path 210 by controlling the flow of water 218 through a bypass path 254. The actuator 252 is also coupled to the controller 236. When the boiler 204 and the heat pump 206 are both switched on and the controller 236 switches off the boiler 204 in response to the supply temperature exceeding the preset supply temperature limit, the controller 236 controls the actuator 252 so as to close an inlet 256 of the mixing valve 250 and divert the water 218 through the bypass path 254 and thereby control the flow temperature. This substantially prevents the water 218 flowing through the boiler 204 and has the advantage that heat loss, associated with flow of the water 218 through the boiler 204 when the boiler 204 is switched off, is prevented. In all other respects the function of the heating system 202 is analogous to the function of the heating system 2 and will not, therefore, be described in further detail.

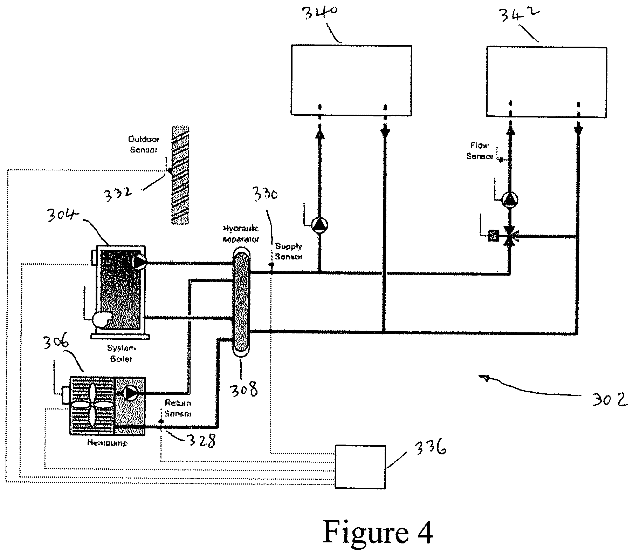

Figure 4 shows a third embodiment of a heating system 302. Many of the parts of the embodiment of Figure 4, when used in combination with the elements of controller 36 described in Figure 2, perform corresponding functions to corresponding parts in the first embodiment of the heating system shown in Figure 1 and, as such, the parts in Figure 4 have reference numerals that are given by incrementing the reference numerals of the corresponding parts in Figure 1 by 300. The heating system 302 of Figure 4 differs from the heating system 2 of Figure 1 in that the boiler 304 and the heat pump 306 are connected in parallel via the hydraulic separator 308. In this embodiment there are also two parallel heating loops 340,342. In all other respects the function of the heating system 302 is analogous to the function of the heating system 2 and will not, therefore, be described in further detail.

Various modifications may be made to the embodiments hereinbefore described without departing from the scope of the invention. For example, it should be understood that the return temperature sensor 28 may be internal or external to the heat pump 6. The boiler 4 or heat pump 6 may be replaced by alternative first and second heat sources respectively, the first heat source being greater than the second heat source. For example, the first heat source may be capable of operating at a higher temperature or may be more powerful than the second heat source. The hydraulic separator 8 may also be replaced by a buffer tank having a capacity of up to 500 litres. Alternatively, the hydraulic separator 8 may be replaced by any other heat exchanger that is capable of exchanging heat between a first heat exchange fluid (typically water) circulating in a first loop which traverses a boiler under the action of a first pump and a second heat exchange fluid (typically water) circulating in a second loop which traverses a heat pump under the action of a second pump wherein the first and second heat exchange fluids are brought into thermal contact in the heat exchanger. The first heat exchange fluid may, for example, flow through a thermally-conductive first pipe portion that is surrounded by and in thermal contact with the second heat exchange fluid. Alternatively, the first heat exchange fluid may flow through a first thermally-conductive pipe portion and the second heat exchange fluid may flow through a second thermally-conductive pipe portion wherein the first and second thermally-conductive pipe portions are surrounded by a further heat exchange fluid. The further heat exchange fluid may, for example, be retained in an enclosure which surrounds the first and second thermally-conductive pipe portions. The thermally-conductive pipe portions may each comprise a length of pipe which is coiled or has a serpentine configuration. The change-over valve 22 may also be replaced by a diverter valve which allows water 18 to be supplied to both the heat exchanger 14 for heating DHW and the main central heating loop at the same time in controlled proportions. The first pump 20 may, for example, be internal or external to the boiler 4 and the second pump 21 may be internal or external to the heat pump 6. The boiler may be oil, gas or solid fuel. The heat exchange fluid may be water, oil or any other suitable fluid.

In addition, rather than employing a binary control scheme such as the one described above in which the boiler and the heat pump are switched on or off in response to a heating demand, the controller may be capable of modulating the outputs of the boiler or the heat pump in response to a heating demand. The preset return temperature, supply temperature and/or outdoor temperature limits may be varied in accordance with ambient temperature requirements, heating load and the like. These temperature limits may, alternatively, be fixed or set and stored in the controller 36. The controller 36 may further comprise a display (not shown) for displaying the temperature limits and data entry means (not shown) which together allow a user to adjust the temperature limits. The controller inputs and/or outputs may be wired or wireless. Furthermore, the Atmel 8-bit AVR® microcontroller 98 may comprise more than one Atmel 8-bit AVR® microcontroller. The Atmel 8-bit AVR® microcontroller 98 may be replaced by a suitable alternative microcontroller such as a Texas Instruments Type MSP 430 microcontroller.

## Claims

1. A heating system (2) having first and second heat sources, said first heat source (4) having a greater heat output than said second heat source (6), a fluid (15) which can be heated by said first and second heat sources (4, 6) and transported to and from a load by a pump means (20, 21), a return temperature sensor (28) arranged to monitor a return temperature of the fluid returning to said second heat source, a supply temperature sensor (30) arranged to monitor a supply temperature of the fluid leaving said first heat source, a controller (36) having, as an input, the output of said return and supply temperature sensors, and having outputs coupled to the first and second heat sources (4, 6), said controller (36) being arranged to generate a first output signal to disable said first heat source (4) when said supply temperature exceeds a preset supply temperature limit and being arranged to generate a second output signal to disable said second heat source (6) when said return temperature exceeds a preset return temperature limit, wherein said preset supply temperature has a first value when the first and second heat sources (4, 6) are enabled and a second value when only said first heat source (4) is enabled, said second value being higher than said first value.

2. A heating system as claimed in claim 1 wherein the first heat source (4) is a boiler and the second heat source (6) is a heat pump.

3. A heating system as claimed in claim 1 or 2 wherein the heating fluid (15) is water.

4. A heating system as claimed in any of claims 1 to 3 wherein the first and second heat sources (4, 6) are connected in series.

5. A heating system as claimed in any of claims 1 to 4 wherein the first and second heat sources (4, 6) are connected in parallel.

6. A heating system as claimed in any of claims 1 to 5 wherein the first and second heat sources (4, 6) are coupled via a heat exchanger.

7. A heating system as claimed in any preceding claim wherein the preset supply temperature limit and the preset return temperature limit are stored in the controller (36).

8. A heating system as claimed in claim 7 including a data entry means and a display to permit the first and second preset temperatures to be set by a user.

9. A heating system as claimed in any preceding claim wherein the controller (36) is wirelessly coupled to the supply and return temperature sensors.

10. A method of controlling a heating system having first and second heat sources (4, 6), said first heat source (4) having a greater heat output than said second heat source (6), said heating system having a fluid (15) which can be heated by said first and second heat sources and transported to a load for delivering heat thereto and then returned to said first and said second heat sources, said method comprising the steps of:
heating said fluid;
transporting said fluid to said load;
returning said fluid from said load to said first and second heat sources (4, 6);
monitoring a supply temperature of the fluid output from said first heat source (4);
monitoring a return temperature of the fluid returning to said second heat source (6);
comparing said supply temperature with a preset supply temperature limit;
generating a first heat source de-activation signal from said controller (36) when said supply temperature exceeds said preset supply temperature limit;
coupling said signal to said first heat source (4) to de-activate said first heat source (4);
comparing said return temperature with a preset return temperature limit;
generating a second heat source de-activation signal from said controller (36) when said return temperature exceeds said preset return temperature limit;
coupling said signal to said second heat source (6) to de-activate said second heat source (6) and assigning a first value to said preset supply temperature limit when said first and said second heat sources (4, 6) are enabled, and assigning a second value to said preset supply temperature limit when only said first heat source (4) is enabled, said second value being higher than said first value.

## Patentansprüche

1. Heizsystem (2), das eine erste und eine zweite Wärmequelle, wobei die erste Wärmequelle (4) eine größere Wärmeabgabe aufweist als die zweite Wärmequelle (6), ein Fluid (15), das von der ersten und der zweiten Wärmequelle (4, 6) aufgeheizt und von einem Pumpmittel (20, 21) zu und von einer Last transportiert werden kann, einen Rücklauftemperatursensor (28), der ausgelegt ist zum Überwachen einer Rücklauftemperatur des Fluids, das zur zweiten Wärmequelle zurückläuft, einen Zulauftemperatursensor (30), der ausgelegt ist zum Überwachen einer Zulauftemperatur des Fluids, das die erste Wärmequelle verlässt, eine Steuerung (36), die als Eingang den Ausgang des Rücklauf- und des Zulauftemperatursensors aufweist und die Ausgänge aufweist, die mit der ersten und der zweiten Wärmequelle (4, 6) gekoppelt sind, aufweist, wobei die Steuerung (36) ausgelegt ist zum Erzeugen eines ersten Ausgangssignals, um die erste Wärmequelle (4) zu blockieren, wenn die Zulauftemperatur eine voreingestellte Zulauftemperaturgrenze übersteigt, und ausgelegt ist zum Erzeugen eines zweiten Ausgangssignals, um die zweite Wärmequelle (6) zu blockieren, wenn die Rücklauftemperatur eine voreingestellte Rücklauftemperaturgrenze übersteigt, wobei die voreingestellte Zulauftemperatur einen ersten Wert aufweist, wenn die erste und die zweite Wärmequelle (4, 6) freigeschaltet sind, und einen zweiten Wert, wenn nur die erste Wärmequelle (4) freigeschaltet ist, wobei der zweite Wert höher als der erste Wert ist.

2. Heizsystem nach Anspruch 1, wobei die erste Wärmequelle (4) ein Boiler ist und die zweite Wärmequelle (6) eine Wärmepumpe ist.

3. Heizsystem nach Anspruch 1 oder 2, wobei das Heizfluid (15) Wasser ist.

4. Heizsystem nach einem der Ansprüche 1 bis 3, wobei die erste und die zweite Wärmequelle (4, 6) hintereinandergeschaltet sind.

5. Heizsystem nach einem der Ansprüche 1 bis 4, wobei die erste und die zweite Wärmequelle (4, 6) parallelgeschaltet sind.

6. Heizsystem nach einem der Ansprüche 1 bis 5, wobei die erste und die zweite Wärmequelle (4, 6) über einen Wärmetauscher gekoppelt sind.

7. Heizsystem nach einem der vorhergehenden Ansprüche, wobei die voreingestellte Zulauftemperaturgrenze und die voreingestellte Rücklauftemperaturgrenze in der Steuerung (36) gespeichert sind.

8. Heizsystem nach Anspruch 7, das ein Dateneingabemittel und eine Anzeige umfasst, um Einstellen der ersten und der zweiten voreingestellten Temperatur durch einen Benutzer zu ermöglichen.

9. Heizsystem nach einem der vorhergehenden Ansprüche, wobei die Steuerung (36) drahtlos mit dem Zulauf- und dem Rücklauftemperatursensor verbunden ist.

10. Verfahren zum Steuern eines Heizsystems, das eine erste und eine zweite Wärmequelle (4, 6) aufweist, wobei die erste Wärmequelle (4) eine größere Wärmeabgabe aufweist als die zweite Wärmequelle (6), das Heizsystem ein Fluid (15) aufweist, das von der ersten und der zweiten Wärmequelle aufgeheizt und zu einer Last, um Wärme an diese zu liefern, transportiert und dann zu der ersten und der zweiten Wärmequelle zurückgeführt werden kann, wobei das Verfahren die folgenden Schritte umfasst:
Heizen des Fluids;
Transportieren des Fluids zu der Last;
Rückführen des Fluids von der Last zu der ersten und der zweiten Wärmequelle (4, 6);
Überwachen einer Zulauftemperatur des Fluids, das von der ersten Wärmequelle (4) abgegeben wird;
Überwachen einer Rücklauftemperatur des Fluids, das zu der zweiten Wärmequelle (6) zurückkehrt;
Vergleichen der Zulauftemperatur mit einer voreingestellten Zulauftemperaturgrenze;
Erzeugen eines Erste-Wärmequelle-Deaktivierungssignals durch die Steuerung (36), wenn die Zulauftemperatur die voreingestellte Zulauftemperaturgrenze übersteigt;
Koppeln des Signals zur ersten Wärmequelle (4), um die erste Wärmequelle (4) zu deaktivieren;
Vergleichen der Rücklauftemperatur mit einer voreingestellten Rücklauftemperaturgrenze;
Erzeugen eines Zweite-Wärmequelle-Deaktivierungssignals durch die Steuerung (36), wenn die Rücklauftemperatur die voreingestellte Rücklauftemperaturgrenze übersteigt;
Koppeln des Signals zur zweiten Wärmequelle (6), um die zweite Wärmequelle (6) zu deaktivieren, und Zuweisen eines ersten Werts zu der voreingestellten Zulauftemperaturgrenze, wenn die erste und die zweite Wärmequelle (4, 6) freigeschaltet sind, und Zuweisen eines zweiten Werts zu der voreingestellten Zulauftemperaturgrenze, wenn nur die erste Wärmequelle (4) freigeschaltet ist, wobei der zweite Wert höher als der erste Wert ist.

## Revendications

1. Système de chauffage (2) comportant des première et seconde sources de chaleur, ladite première source de chaleur (4) ayant une plus grande production de chaleur que ladite seconde source de chaleur (6), un fluide (15) qui peut être chauffé par lesdites première et seconde sources de chaleur (4, 6) et transporté vers et depuis une charge par un moyen de pompe (20, 21), un capteur de température de retour (28) agencé pour contrôler une température de retour du fluide qui revient vers ladite seconde source de chaleur, un capteur de température d'alimentation (30) agencé pour contrôler une température d'alimentation du fluide quittant ladite première source de chaleur, un contrôleur (36) ayant, comme entrée, la sortie desdits capteurs de température de retour et d'alimentation, et ayant des sorties couplées aux première et seconde sources de chaleur (4, 6), ledit contrôleur (36) étant agencé pour générer un premier signal de sortie pour désactiver ladite première source de chaleur (4) quand ladite température d'alimentation dépasse une limite de température d'alimentation prédéfinie et agencé pour générer un second signal de sortie pour désactiver ladite seconde source de chaleur (6) quand ladite température de retour dépasse une limite de température de retour prédéfinie, dans lequel ladite température d'alimentation prédéfinie a une première valeur quand les première et seconde sources de chaleur (4, 6) sont activées et une seconde valeur quand uniquement ladite première source de chaleur (4) est activée, ladite seconde valeur étant supérieure à ladite première valeur.

2. Système de chauffage selon la revendication 1 dans lequel la première source de chaleur (4) est une chaudière et la seconde source de chaleur (6) est une pompe à chaleur.

3. Système de chauffage selon la revendication 1 ou 2 dans lequel le fluide de chauffage (15) est l'eau.

4. Système de chauffage selon l'une quelconque des revendications 1 à 3 dans lequel les première et seconde sources de chaleur (4, 6) sont connectées en série.

5. Système de chauffage selon l'une quelconque des revendications 1 à 4 dans lequel les première et seconde sources de chaleur (4, 6) sont connectées en parallèle.

6. Système de chauffage selon l'une quelconque des revendications 1 à 5 dans lequel les première et seconde sources de chaleur (4, 6) sont couplées par l'intermédiaire d'un échangeur thermique.

7. Système de chauffage selon l'une quelconque des revendications précédentes dans lequel la limite de température d'alimentation prédéfinie et la limite de température de retour prédéfinie sont mémorisées dans le contrôleur (36).

8. Système de chauffage selon la revendication 7 comportant un moyen d'entrée de données et un afficheur pour permettre le réglage des première et seconde températures prédéfinies par un utilisateur.

9. Système de chauffage selon l'une quelconque des revendications précédentes dans lequel le contrôleur (36) est couplé en mode sans fil aux capteurs de température d'alimentation et de retour.

10. Procédé de commande d'un système de chauffage comportant des première et seconde sources de chaleur (4, 6), ladite première source de chaleur (4) ayant une plus grande production de chaleur que ladite seconde source de chaleur (6), ledit système de chauffage ayant un fluide (15) qui peut être chauffé par lesdites première et seconde sources de chaleur et transporté vers une charge pour délivrer de la chaleur à celle-ci puis renvoyé auxdites première et seconde sources de chaleur, ledit procédé comprenant les étapes consistant à :
chauffer ledit fluide ;
transporter ledit fluide jusqu'à ladite charge ;
renvoyer ledit fluide depuis ladite charge jusqu'auxdites première et seconde sources de chaleur (4, 6) ;
contrôler une température d'alimentation de la sortie de fluide de ladite première source de chaleur (4) ;
contrôler une température de retour du fluide revenant à ladite seconde source de chaleur (6) ;
comparer ladite température d'alimentation à une limite de température d'alimentation prédéfinie ;
générer un premier signal de désactivation de source de chaleur à partir dudit contrôleur (36) quand ladite température d'alimentation dépasse ladite limite de température d'alimentation prédéfinie ;
coupler ledit signal à ladite première source de chaleur (4) pour désactiver ladite première source de chaleur (4) ;
comparer ladite température de retour à une limite de température de retour prédéfinie ;
générer un second signal de désactivation de source de chaleur à partir dudit contrôleur (36) quand ladite température de retour dépasse ladite limite de température de retour prédéfinie ;
coupler ledit signal à ladite seconde source de chaleur (6) pour désactiver ladite seconde source de chaleur (6) et assigner une première valeur à ladite limite de température d'alimentation prédéfinie quand lesdites première et seconde sources de chaleur (4, 6) sont activées, et assigner une seconde valeur à ladite limite de température d'alimentation prédéfinie quand uniquement ladite première source de chaleur (4) est activée, ladite seconde valeur étant supérieure à ladite première valeur.
